# EUROPEAN PATENT SPECIFICATION

(11) **EP 2 760 632 B1**
(45) Date of publication and mention of the grant of the patent: **19.07.2017**
(21) Application number: 12762459.1
(22) Date of filing: 31.08.2012
(51) Int. Cl.: B24B 1/00, B24B 19/14, C22F 1/18, F01D 5/28

(54) **METHOD FOR MANUFACTURING TITANIUM ALUMINIDE ARTICLES WITH IMPROVED SURFACE FINISH**
VERFAHREN ZUR HERSTELLUNG VON TITANALUMINIDARTIKELN MIT VERBESSERTEM OBERFLÄCHENFINISH
PROCÉDÉ DE FABRICATION DES OBJETS EN ALUMINURE DE TITANE À FINI DE SURFACE AMÉLIORÉ

(30) Priority: 30.09.2011 US 201113250231
(43) Date of publication of application: 06.08.2014
(73) Proprietor: General Electric Company, Schenectady, NY 12345 (US)
(72) Inventor: KNUDSEN, Bruce, Niskayuna, NY 12309 (US); BEWLAY, Bernard, Patrick, Niskayuna, NY 12309 (US)
(74) Representative: Pöpper, Evamaria
(86) International application number: PCT/US2012/053297
(87) International publication number: WO 2013/048670

(56) References cited:
- EP-A1- 0 513 407
- US-A- 4 512 115
- US-A1- 2006 231 178

## Description

### BACKGROUND

Modern gas turbines, especially aircraft engines, must satisfy the highest demands with respect to reliability, weight, power, economy, and operating service life. In the development of aircraft engines, the material selection, the search for new suitable materials, as well as the search for new production methods, among other things, play an important role in meeting standards and satisfying the demand.

The materials used for aircraft engines or other gas turbines include titanium alloys, nickel alloys (also called super alloys) and high strength steels. Titanium alloys are generally used for compressor parts, nickel alloys are suitable for the hot parts of the aircraft engine, and the high strength steels are used, for example, for compressor housings and turbine housings. The highly loaded or stressed gas turbine components, such as components for a compressor for example, are typically forged parts. Components for a turbine, on the other hand, are typically embodied as investment cast parts. For reducing the weight of gas turbine components, metal matrix composite (MMC) materials are used, which are metal materials with high strength fibers embedded in them.

It is generally difficult to investment cast titanium and titanium alloys and similar reactive metals in conventional investment molds and achieve good results because of the metal's high affinity for elements such oxygen, nitrogen, and carbon. At elevated temperatures, titanium and its alloys can react with the mold facecoat. Any reaction between the molten alloy and the mold will result in a poor surface finish of the final casting which is caused by gas bubbles. In certain situations the gas bubbles effect the chemistry, microstructure, and properties of the final casting such that the resulting articles are compromised.

Once the final component is produced by casting, machining, or forging, further improvements in surface finish are typically necessary before it can be used in the final application. Asperities and pits on the surfaces of components can reduce aerodynamic performance in turbine blade applications, and increase wear/friction in rotating or reciprocating part applications.

In the case of titanium aluminide turbine blades, the cast airfoils may have regions in the dovetail, airfoil, or shroud that are cast/forged oversize. To machine these thin stock regions to the final dimensions, either mechanical machining (such as milling or grinding) or non-mechanical machining (such as electrochemical machining) are typically used. However, in either case, the costs of tooling and labor are high and results in manufacturing delays. EP 0 513 407 A1 teaches a method for the manufacture of turbine blades comprising a coating of doped gamma titanium aluminide, the method including a polishing step. US 2006/0231178 A1 teaches a process for making titanium alloy articles.

Moreover, the limited ductility and sensitivity to cracking of alloys, including titanium aluminide cast articles, may prevent the improvement of the surface finish of cast articles using conventional grinding and polishing techniques. Accordingly, there is need for an intermetallic-based article for use in aerospace applications that has an improved surface finish and associated methods for manufacturing such an article.

### SUMMARY

According to the invention, a method for reducing the Ra value of the surface roughness of a titanium aluminide alloy-containing article according to claim 1 is provided.

By practicing the presently taught method, the roughness of the surface of the article can be reduced at least about 50%. In another embodiment, by practicing the presently taught method, the roughness of the surface of the article is reduced at least about 25%.

In one embodiment, the surface of the titanium aluminide alloy-containing article has an initial roughness of greater than about 100 Ra, and wherein the roughness of the surface of the article is reduced to at least about 50 Ra. In another embodiment, the roughness of the surface of the article is reduced to at least 20 Ra. In one embodiment, high linear speed comprises at least 50 meters per second. In another embodiment, high linear speed comprises at least 100 meters per second. In yet another embodiment, high linear speed comprises at least 1000 meters per second.

In one embodiment, the titanium aluminide alloy-containing article comprises a titanium aluminide alloy-containing engine. In another embodiment, the titanium aluminide alloy-containing article comprises a titanium aluminide alloy-containing turbine. In one embodiment, the titanium aluminide alloy-containing article comprises a titanium aluminide alloy-containing turbine blade.

The abrasive medium in one example comprises alumina, garnet, silica, silicon carbide, boron carbide, diamond, tungsten carbide, and compositions thereof. In one embodiment, the passing and deforming steps are sequentially repeated at least two times. In one embodiment, passing and deforming are sequentially repeated multiple times with abrasive medium of varying size. In one embodiment, passing and deforming are sequentially repeated multiple times with abrasive medium of sequentially decreasing size.

In another embodiment, the deforming step comprises heating the surface of the article. In one embodiment, heating the surface step comprises heating the surface of the article to a temperature above the ductile brittle transition temperature of the titanium aluminide alloy. In one embodiment, the abrasive medium is passed at speeds of about 50 meters per second to about 1000 meters per second across the surface of the titanium aluminide.

The stabilizing step in one example comprises one or more of fixing, attaching, and binding said titanium aluminide alloy-containing article to the structure. Passing of the abrasive medium across the surface of the article may comprise interacting the abrasive medium with phases of the titanium aluminide microstructure. In one embodiment, the roughness of the surface of the article is reduced at least about 25%. In another embodiment, the roughness of the surface of the article is reduced at least about 50%. In one embodiment, the surface has an initial roughness of greater than about 100 Ra, and wherein the roughness of the surface of the article is reduced to about 50 Ra or less after treatment. In one embodiment, the roughness of the surface of the article is reduced to 20 Ra or less after treatment.

In one embodiment, after treatment, the Ra value is reduced by a factor of about three to about six, in one example the Ra value is reduced by a factor of about five. In yet another embodiment, after treatment, the Ra value is reduced to 15 or less.

### BRIEF DESCRIPTION OF THE FIGURES

These and other features, aspects, and advantages of the present articles and methods will become better understood when the following detailed description is read with reference to the accompanying drawings in which like characters represent like parts throughout the drawings, and wherein:

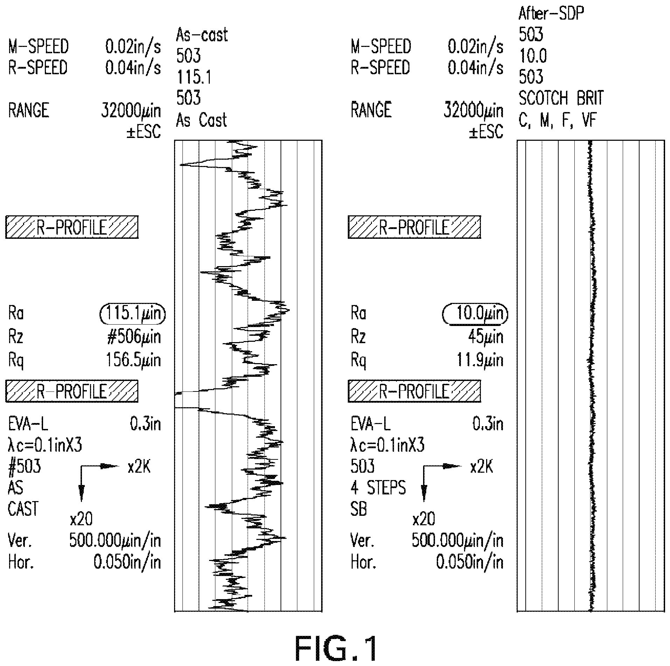

Figure 1 shows two typical profilometer traces, illustrating the improved surface finish that can be achieved according to one aspect of the invention. In particular, Figure 1 provides a comparison of component 503 in the as-cast condition, and after surface deformation polishing ("SDP"), wherein the Ra value of the surface of the as-cast component 503 is 115.1, and the Ra value of the same component 503 after SDP is 10.0.

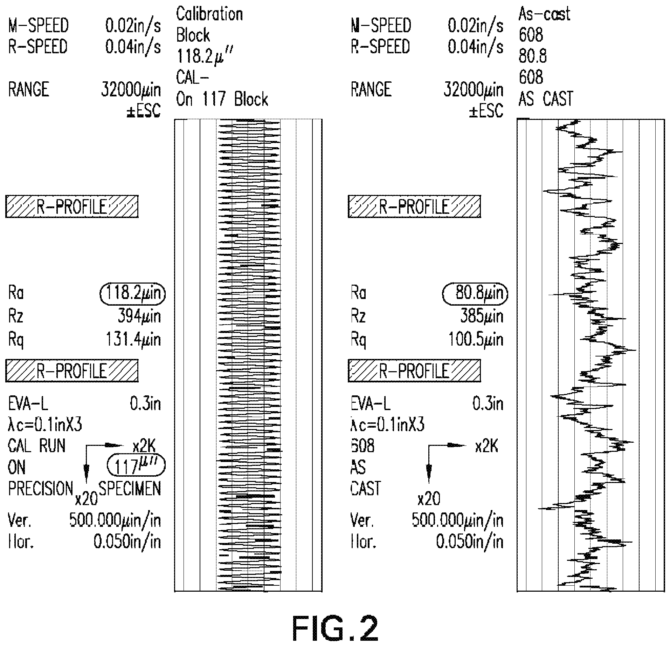

Figure 2 shows two typical profilometer traces, similar to figure 1, illustrating the improved surface finish that can be achieved according to another aspect of the invention. In particular, Figure 2 shows a profilometer trace of measurements of the surface roughness of component 608 in the as-cast condition, and with all the mold material removed, wherein component 608 had an Ra of 80.8; component 608 was produced using an improved casting process in comparison with component 503.

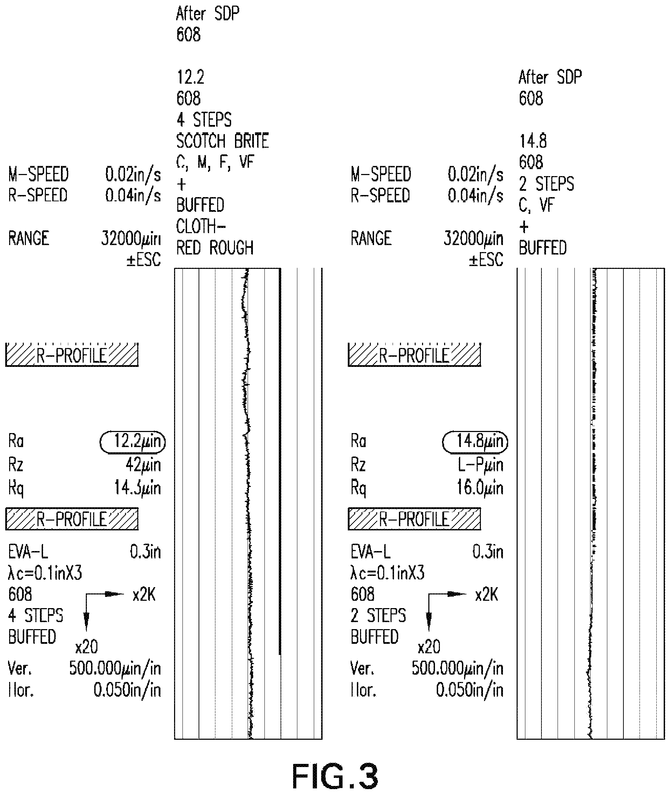

Figure 3 shows two typical profilometer traces, similar to figure 1, illustrating the improved surface finish that can be achieved according to another aspect of the invention. In particular, Figure 3 compares profilometer traces of measurements of the surface roughness of component 608 after two separate SDP treatments of different regions of the component, wherein in the first treatment, an Ra of 12.2 was generated using 5 steps in sequence, and in the second treatment, an Ra of 14.8 was generated using 3 steps in sequence.

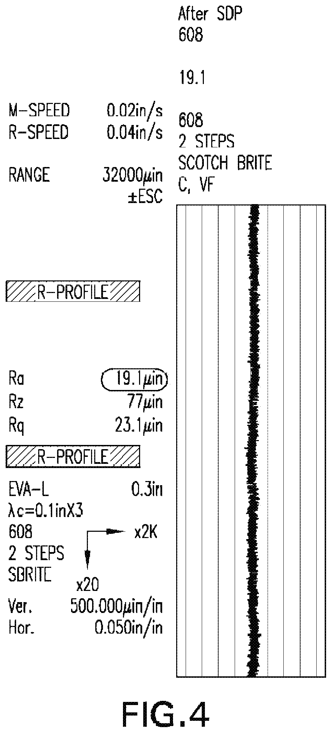

Figure 4 shows a typical profilometer traces, similar to figure 1 through 3, illustrating the improved surface finish that can be achieved according to another aspect of the invention. In particular, Figure 4 shows a profilometer trace of measurements of the surface roughness of component 608 after a third separate SDP treatment, wherein this SDP treatment produced an Ra of 19.1.

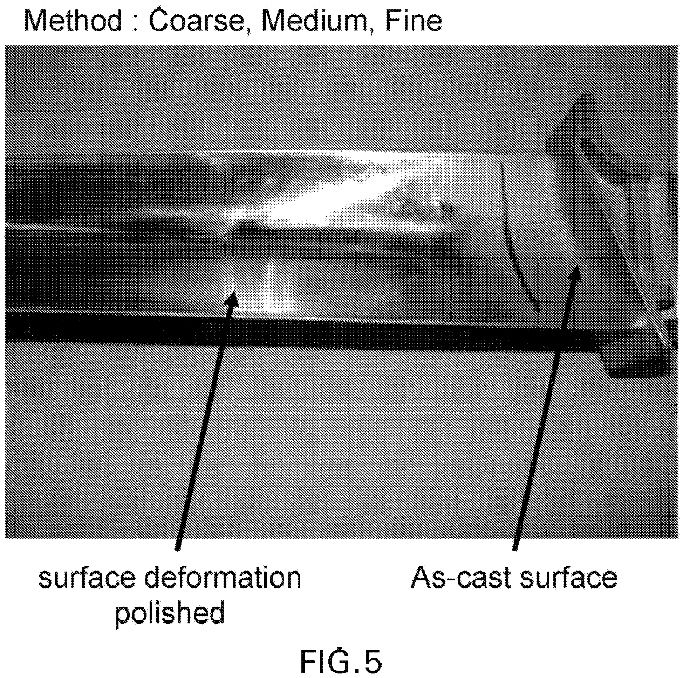

Figure 5 shows a black and white image of the surface roughness of the component, showing the as-cast surface and the surface deformed polished surface (i.e. after SDP treatment), wherein the treatment involved using coarse, medium and fine abrasive medium, respectively. As shown, the surface finish of the component is greatly improved after surface deformation polishing of the as-cast surface. The as-cast section of the component is seen here as a matt, coarser looking surface than the SDP treated section of the component. As shown in Figure 5, the SDP treated section of the component looks smooth and shiny.

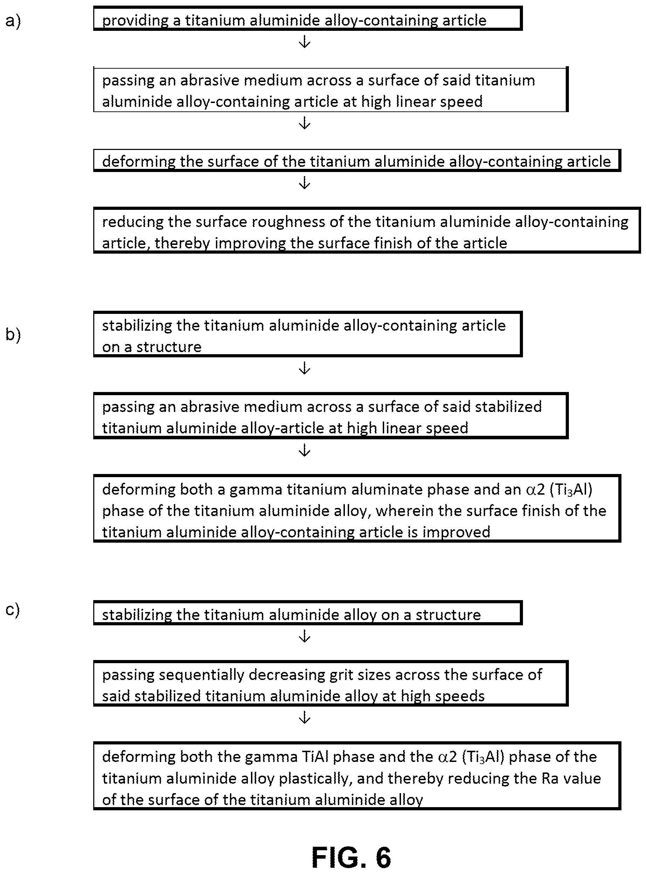

Figure 6 shows a flow chart, in accordance with aspects of the disclosure, illustrating the steps of: a) a method for improving the surface finish of a titanium aluminide alloy-containing article, b) a method for improving a surface finish of a titanium aluminide alloy-containing article, and c) a method for reducing the Ra value of the surface roughness of a titanium aluminide alloy-containing article.

### DETAILED DESCRIPTION

The present disclosure relates generally to titanium and titanium alloys containing articles having improved surface finishes, and methods for improving surface finishes on such articles. Specifically, the present disclosure relates to turbine blades having improved surface finishes that exhibit superior properties, and methods for producing same.

Conventional gas and steam turbine blade designs typically have airfoil portions that are made entirely of metal or a composite. The all-metal blades, including costly wide-chord hollow blades, are heavier in weight, resulting in lower fuel performance and requiring sturdier blade attachments. In a gas turbine aircraft application, the gas turbine blades that operate in the hot gas path are exposed to some of the highest temperatures in the gas turbine. Various design schemes have been pursed to increase the longevity and performance of the blades in the hot gas path.

The instant application discloses that high shear rate local deformation of the surface of a titanium aluminide component, such as a turbine blade, can provide a substantial improvement of the surface finish and improve performance. A cast titanium aluminide based article is subjected to a high shear rate surface treatment to improve the surface finish to a roughness of less than 1 micron. This new surface treatment improves surface finish and does not introduce any additional damage or cracks in the surface of the component.

In one example, the high rate local shear deformation acts over a depth of less than about 100 microns from the surface into the component. In one embodiment, the high rate local shear deformation acts over a depth of less than about 10 microns from the surface into the component. In another embodiment, the high rate local shear deformation acts over a depth of less than about 2 microns from the surface into the component. In a specific embodiment, the high rate local shear deformation acts over a depth of less than about 1 micron from the surface into the component. This surface finish improvement technique can be described as high shear rate deformation polishing. The approach does not require sophisticated tooling to support the part, as is the case for milling.

Surface roughness, often shortened to roughness, is a measure of the texture of a surface. It is quantified by the vertical deviations of a real surface from its ideal form. If these deviations are large, the surface is rough; if they are small the surface is smooth. Roughness is typically considered to be the high frequency, short wavelength component of a measured surface. Roughness plays an important role in determining how a real object will interact with its environment. For example, rough surfaces usually wear more quickly and have higher friction coefficients than smooth surfaces.

Flaws, waviness, roughness and lay, taken collectively, are the properties which constitute surface texture. Flaws are unintentional, unexpected and unwanted interruptions of topography of the work piece surface. Flaws are typically isolated features, such as burrs, gouges and scratches, and similar features. Roughness refers to the topographical irregularities in the surface texture of high frequency (or short wavelength), at the finest resolution to which the evaluation of the surface of the work piece is evaluated. Waviness refers to the topographical irregularities in the surface texture longer wave lengths, or lower frequency than roughness of the surface of a work piece. Waviness may arise, for example, from machine or work piece vibration or deflection during fabrication, tool chatter and the like.

The term polishing refers to a reduction in roughness of work piece surfaces. Lay is the predominant direction of a pattern of a surface texture or a component of surface texture. Roughness and waviness may have different patterns and differing lay on a particular work piece surface. As used herein, the term "turbine blade" refers to both steam turbine blades and gas turbine blades.

The inventors of the instant application set out to provide a titanium aluminide based article, with a surface that possesses improved properties, such as reduced roughness and enhanced mechanical integrity.

Titanium alloys have high relative strength and excellent corrosion resistance, and have mainly been used in the fields of aerospace, deep sea exploration, chemical plants, and the like. One example of a titanium alloy is titanium aluminide. The titanium aluminide alloy comprises a gamma titanium aluminide phase and an α2 (Ti₃Al) phase of the titanium aluminide alloy.

The deforming step of the presently taught method comprises plastically deforming the titanium aluminide alloy. This deformation of the titanium aluminide alloy is achieved by passing an abrasive medium across the surface of the article, causing an interaction of interacting the abrasive medium with the titanium aluminide microstructure. The abrasive medium is passed across the surface of the component at high linear speeds and the resultant high shear rate generates the local surface deformation. The friction generated by the interaction between the component surface and the abrasive medium generates local flow of the intermetallic material without cracking or damaging the surface; this process removes asperities and removes pits in the surface.

The abrasive medium is selected from at least one of alumina, garnet, silica, silicon carbide, boron carbide, diamond, tungsten carbide, and compositions thereof. The hardness of the abrasive is the highest value consistent with the cost of the materials and the limitations of the work piece. In certain embodiments, the harder the abrasive, the faster and more efficient the polishing operation. The reuse of the abrasive medium permits economic use of harder, but more expensive abrasives, with resulting enhancements in the efficiency of polishing and machining operations to increase the polishing rate when required. For example, alumina or silicon carbide may be substituted in polishing operations where garnet is used.

The high shear rate local surface deformation is generated by passing the abrasive medium across the surface of the article. The motion can be rotational, translational, or oscillatory. For example, using a 5cm diameter disk rotating at 20,000 rpm, linear speeds in excess of 50 meters/second may be achieved, and this level of speed in conjunction with alumina particles of a size range from 15 microns to 200 microns, can lead to substantial improvement in the surface finish of the intermetallic alloy article. In one example, the transverse speed of the rotating disk is slower than the linear speed, typically ranging between 1 x 10⁻³ and 10 x 10⁻³ meters/second. In accordance with the teachings herein, the abrasive medium is passed across the surface of the titanium aluminide alloy-containing article. The pressure typically is at about 1 to about 10 pounds per square inch on the surface. In one embodiment, the pressure on the surface is at about 3 to about 6 pounds per square inch. The friction generated by the interaction between the component surface and the abrasive medium generated local flow of the intermetallic material without cracking or damaging the surface. This process removes asperities and removes pits in the surface. The titanium aluminide alloy-containing article comprises a titanium aluminide alloy-containing engine, a turbine, or a turbine blade.

The passing step can include a two step process or up to a five step process. The passing step includes passing different sizes of the abrasive medium at high speed across the surface of the titanium aluminide alloy-containing article. The size of the particles that make up the abrasive medium is an aspect of the disclosure. The passing step comprises passing a first abrasive medium of particles ranging from about 140 microns to about 195 microns across the surface, then passing a second abrasive medium of particles ranging from about 115 microns to about 145 microns across the surface, and then passing a third abrasive medium of particles ranging from about 40 microns to about 60 microns across the surface.

The particle size of the abrasive according to an exemplary embodiment should be the smallest size consistent with the required rate of working, in light of the hardness and roughness of the surface to be worked and the surface finish to be attained. In general terms, the smaller the particle or "grit" size of the abrasive, the smoother the surface attained.

As well as the size of the particles constituting the abrasive medium, the speed of the particles across the surface of the article and the duration of time for each passing step are controlled. In one embodiment, the passing speed is such that it takes less than one minute for the particles to pass across one foot of the article. In another embodiment, it takes between 10 seconds and 40 seconds for the particles to pass across one foot of the article. In another embodiment, it takes between 1 second and 20 seconds for the particles to pass one foot of the article.

In one aspect of the invention, high linear speed comprises at least 50 meters per second, at least 100 meters per second, or at least 1000 meters per second. In certain embodiments, the abrasive medium is passed across the surface of the titanium aluminide alloy-containing article at high linear speeds of about 50 meters per second to about 1000 meters per second. The step of passing the abrasive medium across the surface of the article comprises interacting the abrasive medium with the titanium aluminide microstructure.

The high shear rate deformation of the presently taught techniques provides local heating and improved plastic deformation of the microstructure of the surface of the casting, and the deformation response allows smoothing of the surface and elimination of asperities and pits on the surface of the article. In one embodiment, the deforming step comprises heating the surface. The heating the surface step comprises heating the surface to a temperature above the ductile brittle transition temperature of the titanium aluminide alloy.

A feature of the present technique is the manner in which the surface deformation process interacts with the phases in the alloy microstructure beneath the surface. For example, the titanium aluminide alloy comprise a gamma titanium aluminide phase and an α2 (Ti₃Al) phase of the titanium aluminide alloy. The surface deformation process deforms both phases plastically to ensure an improvement in the surface finish without generating surface cracks or other damage on the surface of the component. The local surface deformation treatment generates sufficient local temperature increase that the phases are above the ductile brittle transition temperature when they are deformed. In addition, the surface deformation processing has residual stress benefits.

The passing and deforming steps of the presently taught method are sequentially repeated, until the desired surface finish or roughness value is achieved. In one example, it is desired that the surface of high performance articles, such as turbine blades, turbine vanes/nozzles, turbochargers, reciprocating engine valves, pistons, and the like, have an Ra of about 20 or less. In some instances, the passing and deforming steps are sequentially repeated at least two times. In some instances, the passing and deforming steps are sequentially repeated multiple times with abrasive medium of varying size or of sequentially decreasing size. This is performed until the desired surface finish is obtained. The passing step comprises passing a first abrasive medium of particles ranging from about 140 microns to about 195 microns across the surface, then passing a second abrasive medium of particles ranging from about 115 microns to about 145 microns across the surface, and then passing a third abrasive medium of particles ranging from about 40 microns to about 60 microns across the surface.

In contrast to the presently taught method, typically, surface finishing of titanium aluminide components is performed by multi-axis, such as 5 axis, milling and machining. However, there are limitations to this conventional processing on the surface finish that can be generated consistently. The stress introduced by these bulk machining techniques can introduce undesirable stresses that can lead to surface cracking of the components. The limited ductility and sensitivity to cracking of typical titanium aluminide cast articles prevents the improvement of the surface finish of cast articles using conventional grinding and polishing techniques.

An example of the present technique involves improving the surface finish of titanium aluminide articles that have been produced by casting. These can have an Ra value of 100 or more. An Ra value of 70 corresponds to approximately 2 microns; and an Ra value of 35 corresponds to approximately 1 micron. It is typically required that the surface of high performance articles, such as turbine blades, turbine vanes/nozzles, turbochargers, reciprocating engine valves, pistons, and the like, have an Ra of about 20 or less. By practicing the presently taught method, the roughness of the surface of the article is reduced at least about 50%. For example, the surface of the titanium aluminide alloy-containing article has an initial roughness of greater than about 100 Ra, and wherein the roughness of the surface of the article is reduced to about 50 Ra or less after treatment. In one aspect, the invention is a titanium aluminide alloy-containing article, for example a turbine blade, having a roughness of less than about one micron across at least a portion of its surface.

In one example, the roughness of the surface of the article after treatment is about 20 Ra or less. In another example, the roughness of the surface of the article after treatment is about 15 Ra or less. In another embodiment, after treatment, the Ra value is reduced to 10 Ra or less. In certain embodiments, after treatment, the Ra value is reduced by a factor of about three to about six. For example, after treatment, the Ra value is reduced by a factor of about five. In one embodiment, the Ra value is improved from a level of 70-100 on a casting before treatment to a level of less than 20 after treatment.

In accordance with the teachings of the present techniques, the roughness of the surface of the article can be reduced at least about 25%. In some instances, the roughness of the surface of the article is reduced at least about 50%. In one embodiment, the roughness of the surface of the article can be reduced by 20 % to 80%, when compared to pre-treatment levels. In one embodiment, the roughness of the surface of the article can be reduced by about 2 times, when compared to pre-treatment levels. In one embodiment, the roughness of the surface of the article can be reduced by about 4 times, when compared to pre-treatment levels. In one embodiment, the roughness of the surface of the article can be reduced by about 6 times, when compared to pre-treatment levels. In one embodiment, the roughness of the surface of the article can be reduced by about 8 times, when compared to pre-treatment levels. In one embodiment, the roughness of the surface of the article can be reduced by about 10 times, when compared to pre-treatment levels. In another embodiment, the roughness of the surface of the article can be reduced by about 2 times to about 10 times, when compared to pre-treatment levels.

The surface of the titanium aluminide alloy-containing article may have an initial roughness of greater than about 100 Ra, and after treatment, the roughness of the surface of the article is reduced to about 50 Ra or less. In another embodiment, the roughness of the surface of the article is reduced to about 20 Ra or less. In one embodiment, the surface of the titanium aluminide alloy-containing article has an initial roughness of about 120 Ra, and this roughness is reduced to about 20 Ra after treatment. In one embodiment, the surface of the titanium aluminide alloy-containing article has an initial roughness of about 115 Ra, and this roughness is reduced to about 10 Ra after treatment. In one embodiment, the surface of the titanium aluminide alloy-containing article has an initial roughness of 110 Ra or more, and this roughness is reduced to 30 Ra or less after treatment.

The present embodiment provides a finished article with a substantially defect-free surface. In addition, by practicing the teachings of the present technique, the finished article that is obtained (for example, a turbine blade) has a roughness of less than 10 micron, and in the alternative less than 1 micron, across at least a portion of the article's surface.

The surface deformation polishing approach generates components with improved surface finish and has several advantages in comparison with conventional milling and grinding methods. For example, the present technique provides a fast and simple method for providing an improved surface finish without generating any surface defects. Moreover, the technique requires low capital equipment costs and can be practiced with simple hand-held tools, and not capital intensive machinery. The approach has low cost, and is also amenable to high-rate automation.

### EXAMPLES

The techniques, having been generally described, may be more readily understood by reference to the following examples, which are included merely for purposes of illustration of certain aspects and embodiments, and are not intended to limit the system and methods in any way.

A roughness value can either be calculated on a profile or on a surface. The profile roughness parameter (Ra, Rq,...) are more common. Each of the roughness parameters is calculated using a formula for describing the surface. There are many different roughness parameters in use, but *Rₐ* is by far the most common. Other common parameters include *R_{z}*, *Rq,* and *Rₛₖ.*

The average roughness, Ra, is expressed in units of height. In the Imperial (English) system, 1 Ra is typically expressed in "millionths" of an inch. This is also referred to as "microinches". The Ra values indicated herein refer to microinches. Amplitude parameters characterize the surface based on the vertical deviations of the roughness profile from the mean line. Figures 1 through 4 show typical roughness profiles as measured using a needle profilometer. A profilometer is a device that uses a stylus to trace along the surface of a part and determine its average roughness.

The surface roughness is described by a single number, such as the Ra. There are many different roughness parameters in use, but Ra is by far the most common. All of these parameters reduce all of the information in a surface profile to a single number. Ra is the arithmetic average of the absolute values and Rₜ is the range of the collected roughness data points. Ra is one of the most common gauges for surface finish.

The following table provides a comparison of surface roughness, as described using typical measurements of surface roughness.

| **Roughness values Ra micrometers** | **Roughness values Ra microinches** | **Roughness Grade Numbers** |
|---|---|---|
| 50 | 2000 | N12 |
| 25 | 1000 | N11 |
| 12.5 | 500 | N10 |
| 8.3 | 250 | N9 |
| 3.2 | 125 | N8 |
| 1.6 | 63 | N7 |
| 0.8 | 32 | N6 |
| 0.4 | 16 | N5 |
| 0.2 | 8 | N4 |
| 0.1 | 4 | N3 |
| 0.05 | 2 | N2 |
| 0.025 | 1 | N1 |

Figures 1 through 4 show a series of profilometer traces of measurements of the surface roughness of components before and after the surface deformation polishing (SDP).

Figure 1 provides a comparison of component 503 in the as-cast condition with all the mold material removed, and after surface deformation polishing. The Ra value of the surface of the as-cast component 503 is 115.1, and the Ra value of the same component 503 after SDP is 10.0. The SDP employed 3 steps of coarse grit (alumina grit size range 141 to 192 microns), medium grit (alumina grit size range 116 to 141 microns), and fine grit alumina (alumina grit size range 40 to 60 microns), followed by a single step of fine SiC particles (grit size range 15 to 40 microns). The SDP improved the Ra by more than a factor of 5. Comparison of the full profilometer traces in Figure 1 shows the substantial reduction in the surface roughness after SDP. Comparison of the profilometer data shows the tremendous improvement of the surface finish that can be generated by the SDP treatments. Also shown in the full profilometer traces are the Rz and Rq values. These data also show improvements that can be generated by the SDP treatments.

Figure 2 shows a profilometer trace of measurements of the surface roughness of component 608 in the as-cast condition, and with all the mold material removed. Component 608 had an Ra of 80.8; component 608 was produced using an improved casting process in comparison with component 503. Also shown in Figure 2 is a profilometer trace of a calibration block, illustrating regular undulations on the trace.

Figure 3 compares profilometer traces of measurements of the surface roughness of component 608 after two separate SDP treatments. In the first treatment, an Ra of 12.2 was generated using 5 steps in sequence. The 5 steps consisted of coarse, medium, and fine grades of alumina grit employed using rotational shear deformation, followed by 1 step of very fine SiC grit, and a final step of cloth buffing. In the second treatment, an Ra of 14.8 was generated using 3 steps in sequence. The 3 steps consisted of coarse grade alumina grit, followed by 1 step of very fine SiC grit (grit size range 15 to 40 microns), and a final step of cloth buffing. The Ra of this second treatment was not quite as low as the first, but fewer steps were used.

Figure 4 shows a profilometer trace of measurements of the surface roughness of component 608 after a third separate SDP treatment; this SDP treatment produced an Ra of 19.1. The SDP treatment employed a step of coarse grade alumina grit (alumina grit size range 141 to 192 microns), followed by a single step of very fine SiC grit , but no disk buffing, as was the case for the data shown in the previous example. The buffing reduced the Ra from 19.1 to 14.8.

Figure 5 also shows black and white photographs of components that have been subjected to SDP. The components possess regions that still have the original cast surface for comparison. The Ra values of these original cast surfaces is typically above 100 Ra. It can be seen that a range of SDP treatments can be employed to generate substantial improvements in the surface roughness of cast intermetallic and titanium aluminide components. The figures show that an almost mirror finish can be obtained.

It can be seen that a range of SDP treatments can be employed to achieve substantial improvements in the surface roughness of cast intermetallic and titanium aluminide components. The Ra value can be reduced by more than a factor of 5. As can be seen in the table below, lower Ra values were obtained with the four and five step treatments compared to the two or three step treatments. The four step treatment of the titanium-containing article achieved the lowest Ra value, indicating this to be a highly effective method for improving the surface finish of a titanium-containing article, for example a titanium aluminide alloy-containing article such as a turbine blade (for example, see figure 5).

| Treatment of article | Ra (microinches) | Rq |
|---|---|---|
| | | |
| 5 Step | 12.2 | 42 |
| 4 Step | 10.0 | 45 |
| 3 Step | 14.8 | - |
| 2 Step | 19.1 | 77 |

It is to be understood that the above description is intended to be illustrative, and not restrictive. For example, the above-described embodiments (and/or aspects thereof) may be used in combination with each other. In addition, many modifications may be made to adapt a particular situation or material to the teachings of the various embodiments without departing from their scope. While the dimensions and types of materials described herein are intended to define the parameters of the various embodiments, they are by no means limiting and are merely exemplary. Many other embodiments will be apparent to those of skill in the art upon reviewing the above description. The scope of the various embodiments should, therefore, be determined with reference to the appended claims. Accordingly, the invention is not to be seen as limited by the foregoing description, but is only limited by the scope of the appended claims.

## Claims

1. A method for reducing the Ra value of the surface roughness of a titanium aluminide alloy-containing article, said method comprising:
stabilizing the titanium aluminide alloy on a structure;
passing an abrasive medium of sequentially decreasing grit sizes across the surface of said stabilized titanium aluminide alloy at speeds of at least 5m/s and thereby
deforming both the gamma TiAl phase and the α2 (Ti₃Al) phase of the titanium aluminide alloy plastically, and reducing the Ra value of the surface of the titanium aluminide alloy,
wherein said passing comprises passing a first abrasive medium of particles ranging from 140 microns to 195 microns across the surface, then passing a second abrasive medium of particles ranging from 115 microns to 145 microns across the surface, and then passing a third abrasive medium of particles ranging from 40 microns to 60 microns across the surface.

2. The method as recited in any one of claim 1, wherein the roughness of the surface of the article is reduced by at least 50%.

3. The method as recited in claim 1, wherein the titanium aluminide alloy-containing article comprises a titanium aluminide alloy-containing turbine blade.

4. The method as recited in claim 1, wherein the abrasive medium comprises alumina, garnet, silica, silicon carbide, boron carbide, diamond, tungsten carbide, and compositions thereof.

5. The method as recited in claim 1, wherein said deforming step comprises heating the surface to a temperature above the ductile brittle transition temperature of the titanium aluminide alloy.

6. The method as recited in claim 1, wherein the roughness of the surface of the article is reduced to 0.51 µm (20 microinches) Ra or less.

7. The method as recited in claim 1, wherein after treatment the Ra value is reduced by a factor of about three to about six.

## Patentansprüche

1. Verfahren zum Reduzieren des Ra-Werts der Oberflächenrauheit eines Titanaluminidlegierung enthaltenden Artikels, wobei das Verfahren umfasst:
Stabilisieren der Titanaluminidlegierung auf einer Struktur;
Führen eines Schleifmediums mit der Reihe nach abnehmenden Korngrößen mit Geschwindigkeiten von mindestens 5 m/s über die Oberfläche der stabilisierten Titanaluminidlegierung und dadurch
plastisches Verformen von sowohl der gamma-TiAl-Phase als auch der α2-(Ti₃Al)-Phase der Titanaluminidlegierung und Reduzieren des Ra-Werts der Oberfläche der Titanaluminidlegierung,
wobei das Führen das Führen eines ersten Schleifmediums mit Partikeln im Bereich von 140 µm bis 195 µm über die Oberfläche, danach Führen eines zweiten Schleifmediums mit Partikeln im Bereich von 115 µm bis 145 µm über die Oberfläche und dann Führen eines dritten Schleifmediums mit Partikeln im Bereich von 40 µm bis 60 µm über die Oberfläche umfasst.

2. Verfahren nach einem der Ansprüche 1, wobei die Rauheit der Oberfläche des Artikels um mindestens 50 % reduziert wird.

3. Verfahren nach Anspruch 1, wobei der Titanaluminidlegierung enthaltende Artikel eine Titanaluminidlegierung enthaltende Turbinenschaufel umfasst.

4. Verfahren nach Anspruch 1, wobei das Schleifmedium Aluminiumoxid, Granat, Siliciumdioxid, Siliciumcarbid, Borcarbid, Diamant, Wolframcarbid und Zusammensetzungen davon umfasst.

5. Verfahren nach Anspruch 1, wobei der Verformungsschritt Erwärmen der Oberfläche auf eine Temperatur oberhalb der duktil-spröden Übergangstemperatur der Titanaluminidlegierung umfasst.

6. Verfahren nach Anspruch 1, wobei die Rauheit der Oberfläche des Artikels auf 0,51 µm (20 Millizoll) Ra oder weniger reduziert wird.

7. Verfahren nach Anspruch 1, wobei der Ra-Wert nach der Behandlung um einen Faktor von etwa drei bis etwa sechs reduziert ist.

## Revendications

1. Procédé de réduction de la valeur Ra de la rugosité de surface d'un article contenant un alliage d'aluminure de titane, ledit procédé comprenant :
la stabilisation de l'alliage d'aluminure de titane sur une structure ;
le passage d'un moyen abrasif dont les tailles de grain diminuent séquentiellement à travers la surface dudit alliage d'aluminure de titane stabilisé, à des vitesses d'au moins 5 m/s, ce qui a pour effet
la déformation plastique de la phase TiAl (γ) et de la phase Ti₃Al (α₂) de l'alliage d'aluminure de titane, et la réduction de la valeur Ra de la surface de l'alliage d'aluminure de titane,
dans lequel ledit passage comprend le passage d'un premier moyen abrasif constitué de particules de 140 microns à 195 microns à travers la surface, puis le passage d'un deuxième moyen abrasif constitué de particules de 115 microns à 145 microns à travers la surface, puis le passage d'un troisième moyen abrasif constitué de particules de 40 microns à 60 microns à travers la surface.

2. Procédé selon la revendication 1, dans lequel la rugosité de la surface de l'article est réduite d'au moins 50 %.

3. Procédé selon la revendication 1, dans lequel l'article contenant un alliage d'aluminure de titane comprend une aube de turbine contenant un alliage d'aluminure de titane.

4. Procédé selon la revendication 1, dans lequel le moyen abrasif comprend l'alumine, le grenat, la silice, le carbure de silicium, le carbure de bore, le diamant, le carbure de tungstène, et des compositions de ceux-ci.

5. Procédé selon la revendication 1, dans lequel ladite étape de déformation comprend un chauffage de la surface à une température supérieure à la température de transition ductile-fragile de l'alliage d'aluminure de titane.

6. Procédé selon la revendication 1, dans lequel la rugosité de la surface de l'article est réduite jusqu'à une valeur Ra de 0,51 µm (20 micropouces) ou moins.

7. Procédé selon la revendication 1, dans lequel, après traitement, la valeur Ra est réduite par un facteur d'environ 3 à environ 6.
